# EUROPÄISCHE PATENTSCHRIFT

(11) **EP 2 448 878 B1**
(45) Veröffentlichungstag und Bekanntmachung des Hinweises auf die Patenterteilung: **18.03.2015**
(21) Anmeldenummer: 10734473.1
(22) Anmeldetag: 05.07.2010
(51) Int. Cl.: C04B 7/345, C04B 7/24, C04B 111/00

(54) **ZEMENTKLINKER UND ZEMENT SOWIE VERFAHREN ZU DEREN HERSTELLUNG**
CEMENT CLINKER AND CEMENT AND METHOD FOR THE PRODUCTION THEREOF
KLINKER DE CIMENT ET CIMENT, AINSI QUE LEUR PROCÉDÉ DE FABRICATION

(30) Priorität: 03.07.2009 AT 10422009
(43) Veröffentlichungstag der Anmeldung: 09.05.2012
(73) Patentinhaber: Baumit Beteiligungen GmbH, 2754 Waldegg (AT); Novak, Denes, 2753 Markt Piesting (AT); Novak, Edith, 2753 Markt Piesting (AT)
(72) Erfinder: NOVAK, Denes, A-2753 Markt Piesting (AT); NOVAK, Edith, A-2753 Markt Piesting (AT)
(74) Vertreter: Müllner, Martin
(86) Internationale Anmeldenummer: PCT/EP2010/059595
(87) Internationale Veröffentlichungsnummer: WO 2011/000972

(56) Entgegenhaltungen:
- EP-A2- 1 975 135
- AT-B- 408 983
- JP-A- 2007 204 330
- US-B1- 6 468 345
- CHEMICAL ABSTRACTS, Bd. 99, Nr. 4, 7. Februar 1983 (1983-02-07), Columbus, Ohio, US; abstract no.: 27121, onoda cement co ltd: "rankinite-containing clinkers" Seite 284 XP1703280 & JP 58 020758 A (ONODA CEMENT CO LTD) 7. Februar 1983 (1983-02-07)
- DATABASE WPI Week 200149 Thomson Scientific, London, GB; AN 2001-455910 XP002606051 & JP 2001 180992 A (MITSUBISHI MATERIALS CORP) 3. Juli 2001 (2001-07-03)

## Beschreibung

### Technisches Gebiet

Die vorliegende Erfindung betrifft einen Zementklinker bzw. einen Zement sowie ein Verfahren zu deren Herstellung.

### Stand der Technik

Portlandzement ist heute sehr weit verbreitet. Es ist bekannt, dass die Herstellung von Portlandzement sehr energieaufwändig ist. Portlandzement zeichnet sich dadurch aus, dass der CaO-Gehalt sehr hoch ist, nämlich typisch 66 Masse-%. Durch den hohen CaO-Gehalt entstehen bei der Hydration von Portlandzement höhere kalkhaltige Mineralphasen, wie Tricalciumsilikat, Dicalciumsilikat und Tricalciumaluminat, die auch in der Anfangsphase der Erhärtung nach ein bis zwei Tagen entsprechend hohe Festigkeiten ergeben. Bei der Herstellung von Portlandzement entsteht wegen des hohen Anteils an CaO jedoch sehr viel CO₂, zum Teil chemisch durch die Umwandlung von Kalk in gebrannten Kalk, zum Teil durch den Energiebedarf. Dies ist bei der derzeitigen Problematik des Treibhauseffekts unerwünscht.

Andererseits fallen bei kalorischen Kraftwerken häufig große Mengen Flugasche mit niedriger hydraulischer Reaktivität an. Die Deponierung dieser Flugaschen ist umweltbelastend und mit hohem Kostenaufwand verbunden.

Es hat daher nicht an Versuchen gefehlt, bei der Zementproduktion die Flugasche als Zumahlstoff bzw. bei der Betonherstellung als Zusatzstoff einzusetzen. Wegen der niedrigen hydraulischen Aktivität der Flugaschen kann diese Zumahlung bzw. dieser Zusatz nur in beschränktem Ausmaß erfolgen. Größere Mengen von Flugasche führen zu starker Verschlechterung der Zement- bzw. Betonqualität. Größere Mengen an Flugasche können daher auf diesem Weg nicht entsorgt werden.

Einen weiteren Weg für die Verwendung dieser anfallenden Flugaschen stellt der Einsatz als Rohstoff bei der Produktion von Portlandzementklinker dar. Dadurch aber, dass im Portlandzementklinker der Anteil an CaO über 60 % liegt und die Flugaschen deutlich geringere Werte aufweisen, ergibt dieser Einsatz eine unzureichende Verwertungsmöglichkeit, da große Mengen an CaO-Trägern zugegeben werden müssen. Andernfalls wird bei höheren Anteilen an Flugasche die Zusammensetzung des Zements im Vergleich zu "normalem" Portlandzement meist so stark geändert wird, dass die Festigkeitswerte unter die vorgeschriebenen Normwerte fallen.

Dies erkennt man z.B. aus der US 6468345 B. Gemäß dieser Schrift wird Kohle zusammen mit CaO verbrannt, sodass die Flugasche unmittelbar Zementklinker ergibt. Die Temperatur beim Verbrennen der Kohle muss dabei ausreichend hoch sein, was meist nicht der Fall sein dürfte. Außerdem müssen bestehende Kraftwerke umgebaut werden, um diese Lehre zu verwirklichen.

Betrachtet man die Beispiele, so erkennt man, dass gemäß den Tabellen 3-6 nur solche Zemente hohe Festigkeitswerte (über 53 MPa) ergeben, bei denen der CaO-Gehalt mindestens 60 Masse-% beträgt ("Test Sample" 3, 6 und 18). Mit abfallendem CaO-Anteil sinken die Festigkeitswerte. Gibt man CaO-Träger zu, um dies auszugleichen, so führt dies wie bei normalem Portlandzement zu höherem Energiebedarf und höherem CO₂ -Ausstoß.

Flugasche enthaltende Zemente werden normalerweise durch CaO angeregt, welches durch Portlandzement (oder gemäß der US 6468345 B direkt als CaO) eingebracht wird. Dies ist der Grund dafür, warum so hohe CaO-Anteile erforderlich sind, und die geforderten hohen Anteile an CaO begrenzen zwangsläufig den Anteil an Flugasche.

EP 1975135 A2 ist vom gleichen Patentinhaber wie US 6268345 B1, aber weicht in seiner Offenbarung leicht ab. Das hydraulische Bindemittel enthält über 5000 cm2/g Blaine fein vermahlene, mäßig latent hydraulische Hochofenschlacke, Sulfatanreger und aktivierende Zusätze. Erfindungsgemäß weist die mäßig latent hydraulische Hochofenschlacke folgende Analysenwerte auf: Al2O3 9 - 13 Gew%, Si02 34-40 Gew%, CaO 34-37 Gew% sowie (CaO+MgO) / (Al2O3+SiO2) 0,88 - 0,98 und einer Glasigkeit > 93 %. Diese Werte können durch Vermischen mehrerer Schlacken eingestellt werden. Vorzugsweise enthält das Bindemittel 0,5 - 5 Gew% Portlandzementklinker.

Es ist bekannt, dass man Portlandzement (der ggf. Flugasche enthält) zusätzlich Sulfat (Gips oder Anhydrit) als Abbindeverzögerer zusetzt. Der Anteil an Sulfaten ist durch die Norm EN-197-1 bei Portlandzement auf 4%, bei Hüttenzementen auf 4,5% begrenzt. Der Grund dafür liegt darin, dass Tricalciumaluminat (das vom Portlandzement stammt) mit Sulfat Ettringit bildet, und zwar im erhärteten Beton, was den Beton zerstört. Typisch ist der Zusatz von 5 Masse-% Gips, was etwa 3 Masse-% SO₃ entspricht.

Es ist auch Sulfathüttenzement bekannt. Die Zusammensetzung von Sulfathüttenzement unterscheidet sich von der von Portlandzement hauptsächlich durch den wesentlich geringeren Anteil an CaO. Bei Sulfathüttenzement wird Schlacke mit bestimmter Zusammensetzung durch sulfate (Gips oder Anhydrit) angeregt; die Sulfate werden zu diesem Zweck in wesentlich größerem Anteil zugegeben als bei Portlandzement, und zwar in einer Menge, dass der SO₃-Anteil im Zement 5-12 Masse-% beträgt. Dadurch entsteht sofort in der Phase der Erhärtung Ettringit, der hohe festigkeitsbildende Wirkung hat und damit gegenüber Portlandzement die hochkalkhaltigen Mineralphasen ersetzt. Obwohl bei Sulfathüttenzement die CaO-Anteile wesentlich geringer sind, werden dennoch (auf Grund der anderen Anregung) ähnliche Festigkeiten wie bei Portlandzement erzielt.

In der folgenden Tabelle sind einige Rezepturen und die mit diesen erzielten Festigkeiten angegeben:

**Tabelle 1**

| **Analyse des Klinkers** | | | |
|---|---|---|---|
| | 1 | 2 | 3 |
| SiO₂ | 33,6 | 32,96 | 30,35 |
| Al₂O3 | 15,81 | 15,58 | 19,65 |
| Fe₂O₃ | 0,43 | 1,42 | 0,43 |
| CaO | 41,91 | 35,79 | 32,66 |
| MgO | 6,12 | 13,32 | 14,82 |

| **Druckfestigkeiten in MPa nach EN 196-1** | | | |
|---|---|---|---|
| Nach 1 Tag | 12,6 | 13,1 | 17 |
| Nach 2 Tagen | 21,4 | 25 | 24,9 |
| Nach 7 Tagen | 33,3 | 45,5 | 35,9 |
| Nach 28 Tagen | 45,3 | 59,2 | 46,0 |

Es ist bekannt, dass bei der Herstellung von Sulfathüttenzement wesentlich weniger CO₂ anfällt. Sulfathüttenzement ist aber im vorigen Jahrhundert fast vollständig vom Markt verschwunden, weil es kaum Schlacken gibt, die dazu geeignet sind. Insbesondere der geforderte hohe Anteil an Al₂O3 wird von heutigen Schlacken nur selten erfüllt.

Wegen der CO₂-Diskussion hat es in der jüngsten Zeit nicht an Versuchen gefehlt, Sulfathüttenzement aus heutigen Schlacken herzustellen. Beispielsweise sei auf das österreichische Patent AT 408983 B verwiesen, gemäß welchem auch Schlacken, die geringere Anteile an Al₂O3 aufweisen, für die Herstellung von Sulfathüttenzement geeignet sind, sofern sie andere Kriterien erfüllen.

Ein Zement gemäß dem österreichischenPatent AT 408983 B ist unter dem Namen "Slagstar" am Markt. Allerdings erfüllen auch nicht viele Schlacken die vom österreichischen Patent 408983 geforderten Kriterien, sodass "Slagstar" keinesfalls in dem Umfang erzeugt werden könnte, wie dies heute bei Portlandzement der Fall ist.

### Kurzbeschreibung der Erfindung

Es ist Aufgabe der vorliegenden Erfindung, einen Zement zu schaffen, der in großem Umfang herstellbar ist, hohe Festigkeitswerte erzielt und mit wesentlich weniger CO₂-Ausstoß als Portlandzement hergestellt werden kann. Es ist eine weitere Aufgabe der vorliegenden Erfindung, einen Zement zu schaffen, bei dessen Herstellung hohe Anteile (z.B. mehr als 50 %) von Ton und/oder Flugasche eingesetzt werden können.

Diese Aufgabe wird erfindungsgemäß dadurch gelöst, dass der Zement bzw. der Zementklinker vorzugsweise schlackefrei ist und der Zementklinker folgende Zusammensetzung aufweist:
CaO: 31-46%, vorzugsweise 31-43%
SiO₂: 31-40%
Al₂O₃: 13-24%

Dieser Zementklinker kann zur sulfatischen Anregung mit 5-12 Masse-% SO₃ zu einem Blaine-Wert von 4500-6000 cm²/g vermahlen sein, wodurch sich ein entsprechender Zement ergibt.

Die Angabe 5-12 Masse-% bezieht sich auf das Sulfat-Ion; der Anteil an Gips oder Anhydrit ist entsprechend dem Molekulargewicht größer.

Fe₂O₃ und MgO können vorhanden sein, solange ihr Anteil so gering ist, dass er nicht schadet.

Die erfindungsgemäße Idee liegt also darin, einen Zement entsprechend der Zusammensetzung von Sulfathüttenzement herzustellen, ohne notwendigerweise Schlacken einzusetzen. Dadurch ist dem Umfang der Herstellung keinerlei Grenze gesetzt, denn z.B. Ton als Ausgangsmaterial ist in ausreichender Menge vorhanden. Dennoch fällt bei der Herstellung dieses neuen Zements wesentlich weniger CO₂ an als bei der Herstellung von Portlandzement. Dieser Zement ist somit als Ersatz für Portlandzement geeignet.

Alternativ zur Herstellung eines Zements mit sulfatischer Anregung kann der erfindungsgemäße Zementklinker auch als Zumahlstoff zu herkömmlichem Portlandzement verwendet werden. Dieser Klinker kann nämlich hervorragend Schlacke ersetzen, die derzeit nicht ausreichend zur Verfügung steht und deren Produktion weltweit rückläufig ist, wie aus der nachstehenden Tabelle ersichtlich ist:

**Tabelle 2**

| **Druckfestig-keit en MPa** | **Portland-ze ment** | **75% Portlandzement** | **75% Portlandzement** |
|---|---|---|---|
| | | **25 % Schlacke** | **25% erfindungsgemä-ßer Z ementklinker** |
| nach 1 Tag | 19,2 | 11,3 | 12,6 |
| nach 2 Tagen | 30,4 | 22,4 | 20,8 |
| nach 7 Tagen | 47,1 | 40,2 | 41,6 |
| Nach 28 Tagen | 58,9 | 56,2 | 57,5 |

Gegenstand der Erfindung ist auch ein Verfahren zur Herstellung eines Zementklinkers bzw. eines Zements, wobei der Zementklinker folgende Zusammensetzung aufweist:
CaO: 31-46%, vorzugsweise 31-43%
SiO₂: 31-40%
Al₂O₃: 13-24%.

Dieses Verfahren ist erfindungsgemäß dadurch gekennzeichnet, dass man Ton und/oder Flugasche mit einem CaO-Träger vermischt und brennt. Zur Herstellung eines Zements vermahlt man den entstandenen Klinker zusammen mit 5-12 Masse-% SO₃ zu einem Blaine-Wert von 4500-6000 cm²/g. Bei diesem Verfahren kann auch Schlacke eingesetzt werden, deren Zusammensetzung nicht der oben genannten Zusammensetzung entspricht, sofern sich nur insgesamt die obige Zusammensetzung ergibt. Der wesentliche Unterschied gegenüber der Herstellung von Sulfathüttenzement besteht darin, dass erfindungsgemäß gebrannt wird, um die gewünschte Zusammensetzung zu erreichen, wogegen bei Sulfathüttenzement die Schlacke direkt (ohne weiteren Brennvorgang) eingesetzt wird.

Es wurde im Rahmen der vorliegenden Erfindung festgestellt, dass Flugasche oft eine Zusammensetzung aufweist, die sich von Sulfathüttenzementen nur dadurch unterscheidet, dass der CaO-Gehalt zu gering ist. Wenn man Flugasche z.B. mit Kalkstein vermischt und brennt, erhält man einen Zement, der - sulfatisch angeregt - hervorragende Eigenschaften aufweist. Im Gegensatz dazu erhält man bei solch einem Zement ohne sulfatische Anregung nur sehr schlechte Festigkeitswerte, oder aber man müsste ganz erheblich mehr CaO-Träger zusetzen, wie man aus der US 6468345 B erkennt.

Bei Ton gelten ganz analoge Überlegungen wie bei Flugasche.

Vergleicht man die Zusammensetzung des Zementrohstoffes Ton und einer typischen Flugasche mit der Zusammensetzung eines Portlandzementklinkers und eines erfindungsgemäßen Zementklinkers ist es eindeutig zu erkennen, dass durch die ähnliche chemische Zusammensetzung für die Produktion eines erfindungsgemäßen Klinkers wesentlich höhere Mengen an Ton bzw. Flugasche eingesetzt werden können und deutlich weniger Kalkstein bzw. kalkältige Produkte erforderlich sind:

**Tabelle 3**

| | Ton | Flugasche | Erfindung | Porlandzement |
|---|---|---|---|---|
| CaO % | 7,0 | 19,5 | 31-46 | 66 |
| SiO₂ % | 50,0 | 48,2 | 31-39 | 21 |
| Al₂O3 % | 17,6 | 20,8 | 13-22 | 6 |

Ein ganz wesentlicher Vorteil dieses Zements besteht darin, dass bei seiner Herstellung wesentlich weniger Kohlendioxid entsteht, weil die Flugasche bereits gebrannt ist, d.h. beim Brennen kein zusätzliches Kohlendioxid mehr abgibt. Kohlendioxid entsteht somit nur vom Brennen des Kalksteins (und natürlich durch das Verbrennen von Brennstoff, der für das Brennen notwendig ist). Dadurch wird um 40-60 % weniger Kohlendioxid erzeugt als bei Portlandzement, und auch weniger als gemäß der US 6648345 B1, weil weniger CaO-Träger zugegeben werden. Dabei wird der CO₂-Ausstoß einerseits prozessbedingt (es entsteht beim Brennen von CaCO₃ weniger CO₂) und andererseits wegen des geringeren Energiebedarfs (für das Zersetzen von CaCO₃ wird viel Energie benötigt) stark reduziert.

Besonders günstig ist hier noch, dass die Brenntemperatur etwas niedriger als üblich liegt, sodass auch deswegen mit weniger Brennstoff das Auslangen gefunden und die Feuerraumbelastung der Brennöfen gesenkt werden kann. Üblicherweise wird Portlandzement bei 1380°C gebrannt, der erfindungsgemäße Zement kann jedoch bei unter 1300°C gebrannt werden.

Ganz besonders günstig ist es, wenn man als CaO-Träger ein bereits gebranntes Produkt, insbesondere Faserbeton (Asbestbeton), einsetzt. Faserbeton ist einerseits ein schwierig zu deponierendes Material, und andererseits hat es den Vorteil, dass dieses Material bereits gebrannt ist (ebenso wie die Flugasche). D.h. es entsteht beim Brennen (nahezu) kein Kohlendioxid infolge chemischer Reaktionen des zu brennenden Materials; Kohlendioxid entsteht (fast) ausschließlich nur durch das Verbrennen von Brennstoff. Bei guter Wärmerückgewinnung kann die Kohlendioxidproduktion somit gering gehalten werden. Durch Wegfall der stofflich bedingten Kohlendioxidemission und durch den geringeren Brennstoffbedarf gegenüber dem Portlandzementklinker kann der CO₂ -Ausstoß um 80% gesenkt werden!

Simulationsrechnungen lassen erwarten, dass der Energiebedarf beim Brennen um 35 % sinkt, wenn Flugasche mit Kalkstein gebrannt wird, und um 58%, wenn Flugasche mit Faserbeton gebrannt wird (jeweils verglichen mit dem Brennen von Portlandzementklinker). Dies liegt daran, dass die Zersetzung von CaCO₃ einen ganz erheblichen Energieaufwand erfordert, der sich in der Gesamtenergiebilanz kräftig niederschlägt.

### Beschreibung der Ausführungsarten

Anhand der folgenden Beispiele wird die Erfindung näher erläutert.

Eine typische Zusammensetzung von Portlandzementklinker ist (alle Angaben in Masse-%):
CaO: 66%
SiO₂: 21 %
Al₂O₃: 6 %
Fe₂O₃: 2,5 %

Auffallend ist, wie erwähnt, der hohe Anteil von CaO, der nur dann erreicht werden kann, wenn relativ wenig Ton oder Flugasche zugemischt wird. Außerdem würde eine höhere Flugaschendosierung den Al₂O₃-Gehalt im Portlandzementklinker zu stark erhöhen.

Folgende zwei Flugaschen A und B wurden im Rahmen der vorliegenden Erfindung untersucht (angegeben sind jeweils Masse-%):

**Tabelle 4**

| | **A** | **B** |
|---|---|---|
| CaO | 20,4 | 18,1 |
| SiO₂ | 46,8 | 52,4 |
| Al₂O3 | 22,5 | 18,8 |
| Fe₂O₃ | 4 | 3,4 |
| MgO | 1,2 | 1,2 |

Weiters kam Kalkstein (Ka) mit folgender Zusammensetzung zum Einsatz (alle Angaben in Masse-%):
CaO: 51,9 %
SiO₂: 3,7 %
Al₂O₃: 1 %
Fe₂O₃: 0,6 %
MgO: 0,6 %

Durch Mischen dieses Kalksteins mit den Flugaschen A und B und anschließendem Brennen ergibt sich Zementklinker mit folgender Zusammensetzung:

**Tabelle 5**

| | **A:Ka = 70:30** | **B:Ka = 57,5:22,4** |
|---|---|---|
| CaO | 34,15 | 39,52 |
| SiO₂ | 38,75 | 38,59 |
| Al₂O3 | 18,36 | 13,68 |
| Fe₂O₃ | 3,41 | 2,69 |
| MgO | 1,17 | 1,15 |

Weiters kamen zwei verschiedene Abfallbetone (Faserbetone, FaA und FaB) mit folgender Zusammensetzung zum Einsatz (alle Angaben in Masse-%):

**Tabelle 6**

| | **FaA** | **FaB** |
|---|---|---|
| CaO | 48,5 | 51,1 |
| SiO₂ | 25,5 | 25,5 |
| Al₂O₃ | 9,8 | 4,5 |
| Fe₂O₃ | 6 | 4,9 |
| MgO | 9 | 8,4 |

Durch Mischen dieser Faserbetone FaA und FaB mit der Flugasche A im Verhältnis 1:1 und anschließendem Brennen ergibt sich Zementklinker mit folgender Zusammensetzung:

**Tabelle 7**

| | **A:FaA = 50:50** | **A:FaB = 50:50** |
|---|---|---|
| CaO | 33,05 | 32,68 |
| SiO₂ | 37,21 | 38,28 |
| Al₂O₃ | 16,79 | 15,3 |
| Fe₂O₃ | 4,9 | 4,36 |
| MgO | 4,71 | 4,08 |

All diese Zementklinker ergeben mit sulfatischer Anregung sehr gute Zementeigenschaften.

Selbstverständlich können übliche Additive zugesetzt werden, beispielsweise in einer Menge von 2-5%.

## Patentansprüche

1. Zementklinker, der folgende Zusammensetzung aufweist (alle Angaben in Masse -%):
CaO: 31-46%, vorzugsweise 31-43%
SiO₂: 31-40%
Al₂O₃: 13-24%.

2. Zementklinker nach Anspruch 1, **dadurch gekennzeichnet, dass** er schlackefrei ist.

3. Zement mit einem Zementklinker nach Anspruch 1 oder 2, **dadurch gekennzeichnet, dass** dieser Zementklinker zur sulfatischen Anregung mit 5-12 Masse-% SO₃ zu einem Blaine-Wert von 4500-6000 cm²/g vermahlen ist.

4. Zement mit einem Zementklinker nach Anspruch 1 oder 2, **dadurch gekennzeichnet, dass** es sich um Portlandzement mit dem Zementklinker nach Anspruch 1 als Zumahlstoff handelt.

5. Verfahren zur Herstellung eines Zementklinkers, der folgende Zusammensetzung aufweist (alle Angaben in Masse -%):
CaO: 31-46%, vorzugsweise 31-43%
SiO₂: 31-40%
Al₂O₃: 13-24%,
**dadurch gekennzeichnet, dass** man Ton und/oder Flugasche mit einem CaO-Träger vermischt und brennt.

6. Verfahren nach Anspruch 5 zur Herstellung eines Zements nach Anspruch 3, **dadurch gekennzeichnet, dass** man den entstandenen Klinker zusammen mit 5-12 Masse-% SO₃ zu einem Blaine-Wert von 4500-6000 cm²/g vermahlt.

7. Verfahren nach Anspruch 6, **dadurch gekennzeichnet, dass** die Brenntemperatur 1200°C bis 1300°C beträgt.

8. Verfahren nach Anspruch 6 oder 7, **dadurch gekennzeichnet, dass** als CaO-Träger Kalkstein verwendet wird.

9. Verfahren nach Anspruch 6 oder 7, **dadurch gekennzeichnet, dass** als CaO-Träger ein bereits gebranntes Produkt, insbesondere Faserbeton, verwendet wird.

## Claims

1. Cement clinker of the following composition (all values are % mass):
CaO: 31-46%, preferably 31-43%;
SiO₂: 31-40%;
Al₂O₃: 13-24%.

2. Cement clinker according to claim 1, **characterized in that** it is free from slag.

3. Cement containing a cement clinker according to claim 1 or 2, **characterized in that** this cement clinker is ground with 5-12% mass SO₃ to a Blaine value of 4500-6000 cm²/g for sulfate activation.

4. Cement containing a cement clinker according to claim 1 or 2, **characterized in that** it is Portland cement with the cement clinker according to claim 1 as a grinding additive.

5. Process for the production of a cement clinker of the following composition (all values are % mass):
CaO: 31-46%, preferably 31-43%;
SiO₂: 31-40%;
Al₂O₃: 13-24%,
**characterized by** mixing clay and/or fly ash with a CaO carrier and firing it.

6. Process according to claim 5 for the production of a cement according to claim 3, **characterized in that** the resulting clinker is ground together with 5-12% mass SO₃ to a Blaine value of 4500-6000 cm²/g.

7. Process according to claim 6, **characterized in that** the firing temperature is 1200°C to 1300°C.

8. Process according to claim 6 or 7, **characterized in that** limestone is used as the CaO carrier.

9. Process according to claim 6 or 7, **characterized in that** already fired products, in particular fiber concrete, is used as the CaO carrier.

## Revendications

1. Clinker de ciment ayant la composition suivante (tous les données sont % en masse):
CaO: 31-46%, de préférence 31-43%
SiO₂: 31-40%
Al₂O₃ : 13 à 24%.

2. Clinker de ciment selon la revendication 1, **caractérisé en ce qu'**il est exempt de scories.

3. Ciment avec un clinker de ciment selon la revendication 1 ou 2, **caractérisé en ce que** à l'excitation sulfatique ce ciment clinker est pulvérisé avec 5-12% en masse SO₃ à une valeur Blaine de 4500 à 6000 cm²/g.

4. Ciment avec un clinker de ciment selon les revendications 1 ou 2, **caractérisé en ce qu'**il est du ciment Portland avec le clinker de ciment selon la revendication 1 comme additif de broyage.

5. Procédé de fabrication d'un clinker de ciment ayant la composition suivante (tous les données sont % en masse):
CaO: 31-46%, de préférence 31 -43%
SiO₂: 31-40%
Al₂O₃: 13-24%,
**caractérisé en ce qu'**un mélange d'argile et/ou de cendre volante avec un support de CaO et on les cuit.

6. Procédé selon la revendication 5 pour la fabrication d'un ciment selon la revendication 3, **caractérisé en ce que** le clinker obtenu est pulvérisé avec 5 à 12% en masse de SO₃ à une valeur Blaine de 4500 à 6000 cm²/g.

7. Procédé selon la revendication 6, **caractérisé en ce que** la température de cuisson est 1200°C à 1300°C.

8. Procédé selon la revendication 6 ou 7, **caractérisé en ce que** le calcaire est utilisé comme support de CaO.

9. Procédé selon les revendications 6 ou 7, **caractérisé en ce qu'**un produit déjà cuit, en particulier du béton renforcé par des fibres, est utilisé comme support de CaO.
